(19) Europäisches Patentamt

European Patent Office

Office européen des brevets

(11) Veröffentlichungsnummer: **0 038 989**

**B2**

(12) **NEUE EUROPÄISCHE PATENTSCHRIFT**

(45) Veröffentlichungstag der neuen Patentschrift:
04.07.90

(21) Anmeldenummer: **81102814.1**

(22) Anmeldetag: **13.04.81**

(51) Int. Cl.⁵: **C 03 B 37/06, D 01 D 5/14**

(54) **Ziehdüse zur Durchführung eines Verfahrens zur Herstellung von Mineralwollefasern.**

(30) Priorität: **25.04.80 DE 3016114**

(43) Veröffentlichungstag der Anmeldung:
**04.11.81 Patentblatt 81/44**

(45) Bekanntmachung des Hinweises auf die
Patenterteilung:
**03.10.84 Patenblatt 84/40**

(45) Bekanntmachung des Hinweises auf die
Entscheidung u¨ber den Einspruch:
**04.07.90 Patentblatt 90/27**

(84) Benannte Vertragsstaaten:
**AT BE CH DE FR GB IT LI LU NL SE**

(56) Entgegenhaltungen:
**EP-B-0 119 426      DE-C- 883 800**
**EP-B-0 119 429      DE-C- 946 739**
**DE-A-2 205 507      GB-A- 724 314**
**DE-A-2 237 884      GB-A- 928 865**
**DE-C- 803 925       US-A-4 060 355**

**SU-Erfinderschein 371178**

(73) Patentinhaber: **BAYER AG**
**D-5090 Leverkusen 1 Bayerwerk (DE)**

(72) Erfinder: **Muschelknautz, Edgar, Prof. Dr.**
**Carl-Rumpff-Strasse 33**
**D-5090 Leverkusen (DE)**
Erfinder: **Rink, Norbert, Dr.**
**Bahnhofstrasse 38**
**D-4047 Dormagen 1 (DE)**

Courier Press, Leamington Spa, England.

EP 0 038 989 B2

**Beschreibung**

Die vorliegende Erfindung betrifft eine Ziehdüse gemäß dem Oberbegriff des Anspruchs 1. Eine solche Ziehdüse ist aus US—A—4 060 355 bekannt. Das Verfahren zur Herstellung von Mineralwollefasern nach dem Düsenblasverfahren, bei dem aus an der Unterseite eines die Mineralschmelze enthaltenden Tiegels angeordneten Schmelzeausflussöffnungen unter der Wirkung der Schwerkraft und zusätzlicher Druckkräfte aufliessende Schmelzeströme bei Hindurchtritt durch Ziehdüsen unter der Wirkung von mit hoher Geschwindigkeit im wesentlichen parallel zu den Schmelzeströmen strömenden Gasen zerfasert, ausgezogen und unter die Erstarrungstemperatur abgekühlt werden, wurde bereits 1922 (DE—PS 429 554) vorgeschlagen.

Das Düsenblasverfahren hat gegenüber denjenigen Verfahren zur Herstellung von Mineralwolle, bei denen die Zerfaserung mittels Zentrifugalkräften erfolgt, den Vorteil, dass keinerlei mechanisch bewegte Teile, die mit dem Mineralschmelzeströmen in Berührung geraten, eingesetzt werden müssen. Beim Düsenblasverfahren erfolgt die Zerfaserung rein aerodynamisch mittels Luft, Dampf oder anderen Gasen.

Nach der GB—PS 928 865 wird ein Düsenblasverfahren zur Herstellung von Mineralwolle vorgeschlagen, bei dem die Zerfaserung in zwei aufeinanderfolgenden Blasstufen erfolgt, wobei nach einer ersten Zerfaserung in der ersten Blasstufe eine zweite Zerfaserung unter Richtungsänderung erfolgt. In der zweiten Blasstufe werden dickere, nicht ausgezogene Fasern, die einer langsameren Abkühlung unterliegen und daher in der zweiten Blasstufe noch viskos genug sind, weiter ausgezogen; in der ersten Blasstufe hinreichend dünn ausgezogene Fasern sollten bei Eintritt in die zweite Blasstufe bereits so weit abgekühlt sein, dass ein weiteres Ausziehen nicht erfolgen kann.

Gemäss US—A—4 060 355 wird in einer konvergierend-divergierenden Ziehdüse eine Überschallströmung erzeugt, wobei durch entsprechende Querschnittsgestaltung des divergierenden Teils eine starke Beschleunigung und damit verbunden eine starke adiabatische Abkühlung des Blasmediums zur schnellen Erstarrung der Fasern bewirkt wird.

Der Faserbildungsprozess beim Düsenblasverfahren ist bisher weitgehend ungeklärt. Aus der je Schmelzeausflussöffnung des Tiegels pro Zeiteinheit produzierten Wollemenge und dem mittleren Faserdurchmesser lässt sich errechnen, dass nach dem Stand der Technik aus jeder Düsenöffnung etwa 4000 m Faser je Sekunde erzeugt werden. Die Strömungsgeschwindigkeit des ausziehenden Blasmediums liegt eta bei Schallgeschwindigkeit, d.h. zwischen 300 und 400 m/s. Selbst wenn man annimmt, dass die Fasern die maximale Geschwindigkeit des Blasmediums erreichen sollten, werden demnach mindestens 12 gesonderte Fasern aus einem Schmelzestrom ausgezogen.

Nach der US—Patentschrift 2 206 058 wird daher angenommen, dass der Schmelzestrom beim Eintritt in das Blasmedium seht stark beschleunigt und gleichzeitig verfeinert wird und sich der Geschwindigkeit des Blasmediums nähert. Während er Schmelzestrom seinen Weg durch die Düse fortsetzt, zeigen Teile von ihm die Tendenz, sich seitwärts zu bewegen, wobei sie dabei in eine Zone des Blasmediums mit einer anderen Geschwindigkeit eintreten. Andere Teile des Schmelzestromes verbleiben in den Zonen mit hoher Geschwindigkeit und überholen die erstgenannten Teile, die in die Zone geringerer Geschwindigkeit eingetreten waren. Dadurch bewegt sich der Glasstrom in einer Schlaufen- oder Zickzackbewegung. Das Ausziehen der Fasern muss nach dieser Vorstellung also innerhalb der Düse nach Art eines mehrfachen Peitschenknalleffektes erfolgen, bei dem eine Vervielfältigung der Fasern eintritt.

Diese Vorstellung von der Zerfaserung führte zur Entwicklung eines Verfahrens ohne Einsatz von Ziehdüsen nach US—PS 3 874 886. Nach die sem Vorschlag tritt der Schmelzestrom unter einem Winkel in einen Gasstrom ein und wird in diesem von einem Gasstrahl getroffen und unter Ausnutzung dieses Peitschenknalleffektes zu Fasern ausgezogen. Ein solches Verfahren ist jedoch wegen der fehlenden Führung der verschiedenen Gasströme und Strahlen schwierig zu kontrollieren.

Die vorliegende Erfindung geht nun von der Vorstellung aus, dass die Zerfaserung, d.h. die Vervielfältigung des Schmelzestrums in eine Vielzahl von Fasern durch das Druckgefälle im Einlauf der Ziehdüse bewirkt wird. Die Aufsplitterung des Schmelzestroms in Einzelströme erfolgt danach bereits im Einlauf der Ziehdüse, wobei innerhalb der Ziehdüse die Einzelströme ausgezogen werden, gegebenenfalls unter weiterer Vervielfältigung.

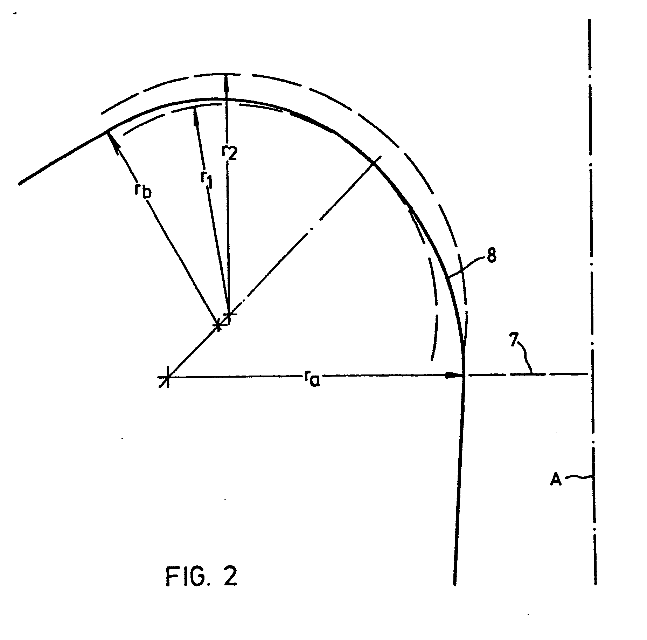

Gegenstand der vorliegenden Erfindung ist daher eine Ziehdüse zur Durchführung eines Verfahrens zur Herstellung von Mineralwollefasern, vorzugsweise Steinwollefasern, nach dem Düsenblasverfahren, bei dem aus mindestens einer Öffnung im Boden eines Schmelzetiegels mindestens ein Schmelzestrom austritt, der in einer konvergierend-divergierenden Ziehdüse durch ein im wesentlichen parallel zu dem Schmelzestrom strömendes Blasmedium zerfasert wird, wobei das Blasmedium durch ein zwischen Düseneinlass und -auslass erzeugtes Druckgefülle in die Düse eingesaugt wird und die Strömungsgeschwindigkeit in einem nachgeschalteten Diffusor reduziert wird, dadurch gekennzeichnet, daß

a) die Kontur der Düse im konvergierenden Teil innerhalb zweier konzentrischer Radien von r1 = 28% und r2 = 50%, vorzugsweise r2 = 32%, des engsten Durchmessers der Düse verläuft (Fig. 2),

b) der divergierende Teil der Düse einen Erweiterungswinkel ($\alpha$) von 1,8 bis 2,2° aufweist und

c) unterhalb des divergierenden Teils ein Bereich mit konstantem Querschnitt vorgesehen ist, an den sich ein Unterschalldiffusor (12) anschliesst,

d) der divergierende Teil (9) eine Länge von 35 bis 40 mm hat, so daß

im Einlaß der Ziehdüse ein solches Druckgefälle erzeugt wird, daß der Schmelzestrom in mindestens 30 Einzelfäden aufgespalten wird,

im divergierenden Teil der Ziehdüse ein minimales, die Auslösung von Druckstössen verhinderndes Druckgefälle über eine ohne Ablösung der laminaren Grenzschicht zur Erstarrung der Fasern ausreichenden Länge besteht, und

die danach folgende Druckumsetzung zuerst mit Stoß bei konstätem Querschnitt der Ziehdüse und danach in an sich bekannter Weise im Unterschalldiffusor bewirkt wird.

Die vorliegende Erfindung wird mit Bezug auf die anliegenden Figuren näher erläutert.

Fig. 1 zeigt dem Schmelzestrom am Einlauf in die Ziehdüse,

Fig. 2 zeigt eine besonders bevorzugte Form der Einlaufkontur der Ziehdüse,

Fig. 3 zeigt eine Ziehdüse zur Durchführung des Verfahrens,

Fig. 4 zeigt eine spezielle Ausführungsform mit Treibstrahldüsen,

Fig. 5 zeigt als Laval-Düsen ausgeführte Treibstrahldüsen,

Fig. 6 zeigt eine Ziehdüse mit Heissgasanströmung der Schmelzfäden,

Fig. 7 zeigt eine Ziehdüse mit Absaugung der laminaren Grenzschicht,

Fig. 8 zeigt eine spezielle Ausführung des divergierenden Teils der Ziehdüse,

Fig. 9 zeigt den Diffusor mit Querströmungshindernissen,

Fig. 10 zeigt perspektivisch eine schiltzförmige Ziehdüse,

Fig. 11 zeigt eine Anordnung von Schmelzeausflussöffnungen in Doppelreihe,

Fig. 12 erläutert den Mattenherstellungsprozess.

Die in den Figuren engegebenen Ziffern bezeichnen im einzelenen, wobei gleiche Ziffern in verschiedenen Figuren gleiche Elemente bezeichnen.

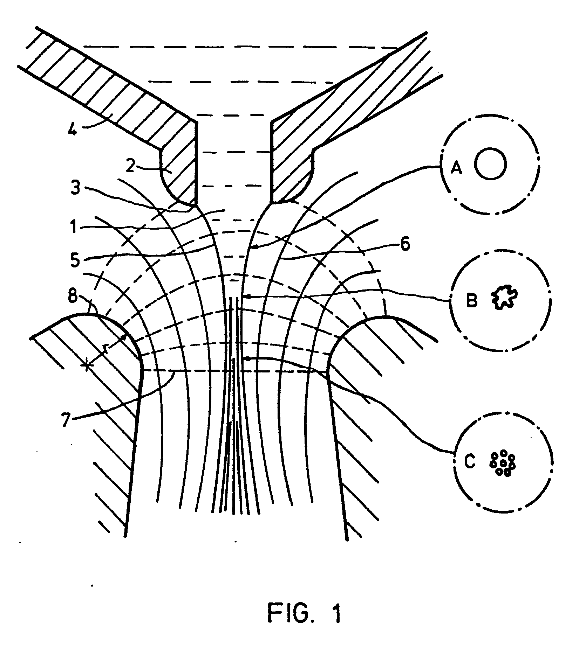

Die der Erfindung zugrunde liegende Vorstellung über den Zerfaserungsprozess wird zunächst mit Bezug auf Fig. 1 erläutert:

Der Schmelzestrom 1 tritt bei 3 aus den Nippel 2 am Boden des Schmelzetiegels 4 aus. Aufgrund der Saugwirkung des in die Ziehdüse einströmenden Blasmediums wird der Schmelzestrom beschleunigt, wobei wich sein Querschnitt verengt. Herrscht nun im Einlauf der Ziehdüse ein hinreichend starkes Druckgefälle, erhält der Schmelzestrom eine Kontur 5, die stärker gekrümmt ist als die Stromlinie 6 des Blasmediums, so daß der Schmelzestrom von einer Unterdruckzone umgeben ist. Die dadurch auf den Schmelzestrom quer zur Strömungsrichtung ausgeübten Kräfte bewirken zunächst eine Zerfransung (Querschnitt B) des unmittelbar nach dem Austritt aus dem Nippel zunächst kreiförmigen Querschnitts (Querschnitt A) des Schmelzestromes. Auf seinem weiteren Weg in die Ziehdüse zerfällt der Schmelzestrom in eine Vielzahl von Einzelströmen (Querschnitt C). Der Zerfall in Einzelströme ist bei Erreichen des engsten Ziehdüsenquerschnitts 7 erfolgt.

Die Fadenvervielfältigung im Einlauf der Ziehdüse kann Werte von 30 bis mehrere 100 erreichen, d.h. je aus dem Schmelzetiegel austretendem Schmelzestrom entstehen 30 bis mehrere 100 Einzelfäden.

Das Verhältnis der Drücke am engsten Querschnitt 7 der Ziehdüse und in der Umgebung des Tiegels kann 0,528 nicht unterschreiten. In diesem Fall erreicht das Blasmedium am engsten Querschnitt der Ziehdüse Schallgeschwindigkeit. Dieser Druckabfall soll nun erfindungsgemäss mit grösstmöglichem Gefälle auf möglichst kurze Distanz im Einlauf der Ziehdüse erfolgen. Dies wird durch die Formgebung der Düse im konvergierenden Teil 8 erreicht. Die Krümmung der Kontur der Ziehdüse wird bevorzugt so gestaltet, dass die Stromlinie des Blasmediums dieser gerade noch folgen kann. Die Krümmung sol stärker sein als die sich natürlich ausbildende Stromlinienkontur der Einlaufströmung in eine Borda-Öffnung oder eine Blende, bei der der konvergierende Teil auf eine Kante reduziert ist. Die optimale Krümmung wird zweckmässig experimentell ermittelt. Es wurde befunden, dass die Kontur zur Erreichung eines maximalen Druckgefälles im Einlauf der Düse zwischen zwei konzentrischen Kreisbögen mit Radien von $\gamma = 28\%$ und $\gamma = 50\%$, vorzugsweise $\gamma 2 = 32\%$, der Breite der Ziehdüse an ihrem engsten Querschnitt 7 verläuft. Eine gute Annäherung des maximalen Druckgefälles wird erreicht, wenn die Kontur durch einen Kreisbogen mit Radius $\gamma = 30\%$ der Breite der Ziehdüse an ihrem engsten Querschnitt beschrieben wird.

Der Kreisbogen, der die Einlaufkontur der Zieh-Düse beschreibt, hat vorzugsweise eine Länge von 90 bis 135, vorzugsweise 110 bis 120, Winkelgraden.

Eine noch bessere Annäherung des maximalen Druckgefälles wird erreicht, wenn die Kontur beginnend am engsten Querschnitt der Ziehdüse zunächst durch einen ersten Kreisbogen mit einem ersten Radius $r_a = 40\%$ der Breite der Ziehdüse an ihrem engsten Querschnitt mit einer Länge von 40 bis 50 Winkelgraden und dan tangential anschliessend durch einen zweiten Kreisbogen mit einem zweiten Radius $r_b = 30\%$ der Breite der Ziehdüse an ihrem engsten Querschnitt und einer Länge von 45 bis 90, vorzugsweise 75, Winkelgraden beschrieben wird. Eine solche Kontur ist in Fig. 2 dargestellt. Die Figur zeigt die Ziehdüsenachse A und die Einlaufkontur 8 einer Düsenhälfte. Die Einlaufkontur soll bevorzugt zwischen den beiden konzentrischen getrichelten Kreisbögen mit den Radius $r_1$ und $r_2$ verlaufen. Besonders bevorzugt wird die Kontur zunächst durch einen Kreisbogen mit Radius $r_a$, an den sich tangential ein zweiter Kreisbogen mit Radius $r_b$ tangential anschliesst, beschrieben.

Zum Beispiel soll bei einer Ziehdüse mit einer Breite an ihrem engsten Querschnitt von 5 mm der erste Radius $r_a = 2$ mm und der zweite Radius $r_b = 1,5$ mm betragen.

Der Schmelzetiegel 4 wird vorzugsweise in einem solchen Abstand von der Ziehdüse angeordnet, dass sich die Schmelzaustrittsöffnung bei einem Druckniveau von 0,92 bis 0,98, besonders bevorzugt bei etwa 0,96, des Umgebungsdruckes befindet. Der Durchmesser der Schmelzeaustrittsöffnung 3 misst vorzugsweise zwischen 30 und 50% der Breite der Ziehdüse an ihrem engsten Querschnitt.

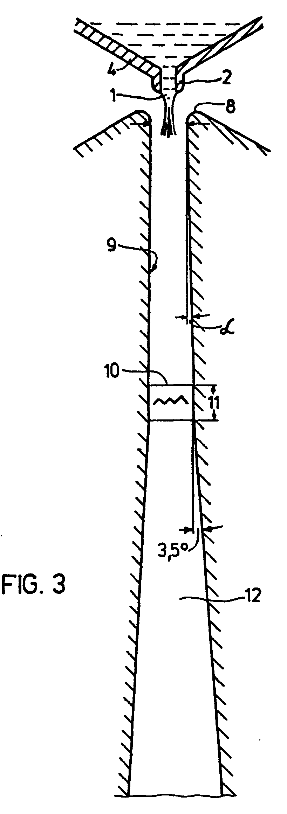

Im folgenden wird auf Fig. 3 Bezug genommen.

Die im Düseneinlauf durch Zerfaserung entstandenen Einzelfäden werden im divergierenden Teil 9 der Ziehdüse im wesentlichen zu Fasern ausgezogen. Es wurde gefunden, dass die Länge der schliesslich die Mineralwolle bildenden Einzelfäden durch die im divergierenden Teil 9 der Ziehdüse herrschenden Bedingungen und seine Länge wesentlich bestimmt wird. Druckstösse in diesem Bereich müssen vermieden werden. Das mit Schallgeschwindigkeit in diesen Teil der Düse eintretende Blasmedium wird erfindungsgemäss über eine möglichst lange Strecke weiter beschleunigt. Die Länge des divergierenden Teils der Düse ist dadurch begrenzt, dass sich an der Wand der Düse eine laminare Grenzschicht ausbildet, die sich über die Länge der Düse verstärkt und schliesslich turbulent und dadurch gleichzeitig schnell dicker wird.

Dieser Umschlag der laminaren Grenzschicht würde zu einer Störung der Überschallströmung des Blasmediums führen und damit Verdichtungsstösse auslösen. Die in dem divergierenden Bereich noch viskosen Fasern würden abreissen, wodurch kürzere Fasern erhalten würden. Ferner würde auch aufgrund der dann herrschenden unregelmässigen Strömungsverhältnisse die Bildung ungleichmässig ausgezogener Schmelzeteile, z.B. die Enstehung von verdickten Faserenden, begünstigt und durch sehr frühes und unregelmässiges Abreissen würden Perlen entstehen.

Erst die oben bereits geschilderte Vorstellung über den Zerfaserungsprozess hat zu der Erkenntnis geführt, dass es zur Herstellung von Fasern mit möglichst geringer Streuung von Faserdicke und Faserlänge und zur Vermeidung der Bildung von Perlen notwendig ist, dem divergierenden Teil möglichst ungestörte, definierte Stromungsverhältnisse für das Blasmedium zu schaffen. Zum Beispiel würde eine zu grosse Länge des divergierenden Teils zu einem weitgehend unkontrollierten Umschlag der laminaren Grenzschicht mit weitgehend undefinierter Rückwirkung auf die Überschallströmung des Blasmediums führen. Anderseits würde ein zu kurzer divergierender Teil entweder nicht genügend fein ausgezogene Fasern, d.h. dickere und kürzere Fasern liefern, wenn es gelingt, die Fasern schnell genug abzukühlen, oder, wenn die Abkühlung nicht schnell genug erfolgt, würde der Ausziehprozess in weiter stromab liegenden Bereichen, in denen weniger definierte Strömungsverhältnisse herrschen, fortgesetzt werden.

Es wurde gefunden, dass ein Umschlag der laminaren Grenzschicht erst bei Längen des divergierenden Teils 9 von oberhalb 40 mm auftritt. Erfindungsgemäss besitzt daher der divergierende Teil 9 der Ziehdüse bevorzugt eine Länge von 35 bis 40 mm.

Der Erweiterungswinkel $\alpha$ des divergierenden Teils soll bevorzugt zwischen 1,8 bis 2,2°, besonders bevorzugt etwa 2° betragen, so dass das Blasmedium eine stetige weitere Beschleunigung bei minimalem Druckabfall erfährt.

Der Druck am Austritt 10 des divergierenden Teils der Ziehdüse wird zweckmässig mit 0,2 bis 0,4, vorzugsweise mit 0,3 bis 0,35, des Umgebungsdrucks des Tiegels vorgegeben.

Bevor die Fasern nun zur Bildung einer Mineralwollematte abgelegt werden können, muss die Strömungsgeschwindigkeit des Blasmediums herabgesetzt werden. Der Übergang von Überschallströmung zu Unterschallströmung erfolgt durch Verdichtungsstoss. Wie bereits ausgeführt, stellen solche Verdichtungsstösse Störungen eines geordneten Faserziehprozesses dar. Nach der Erfindung ist daher vorgesehen, die Druckumsetzung durch Stoss definiert so durchzuführen, dass dine Störung des Ausziehprozesses weitgehend vermieden wird. Der Verdichtungsstoss wird daher in einem Bereich der Ziehdüse mit konstantem Querschnitt 11 erzwungen. Die Länge des Düsenteils mit konstantem Querschnitt kann zweckmässig 50 bis 80%, vorzugsweise 60 bis 70%, der Breite des Teils mit konstantem Querschnitt betragen.

Obwohl es zur Einleitung und Fixierung des Verdichtungsstosses im allgemeinen ausreichend ist, einen Bereich mit konstantem Querschnitt vorzusehen, kann es zweckmässig sein, in dem Bereich mit konstantem Querschnitt auf der Begrenzungswand der Düse in diesem Bereich zusätzlich kleinere Störkanten oder Störstellen vorzusehen, durch die die Einleitung und Fixierung des Verdichtungsstosses an definierter Stelle weiterhin gewährleistet wird. Die Störstellen können auch in Form von feinen, in dem Bereich mit konstantem Querschnitt eingeblasenen Gasstrahlen ausgebildet sein.

Die Fasern sollen vor dem Eintritt in den Teil mit konstantem Querschnitt erstarrt sein.

An den Teil mit konstantem Querschnitt schliesst sich ein Unterschalldiffusor 12 an, in dem die Strömungsgeschwindigkeit des Blasmediums weiter herabgesetzt wird. Vorzugsweise beträgt die Austrittsgeschwindigkeit des Blasmediums aus dem Unterschalldiffusor weniger als 20 m/s besonders bevorzugt 5 bis 15 m/s.

Die Fasern fallen dann zur Bildung einer Fasermatte in an sich bekannter Weise auf ein perforiertes Transportband, unterhalb dem die Blasluft abgesaugt wird.

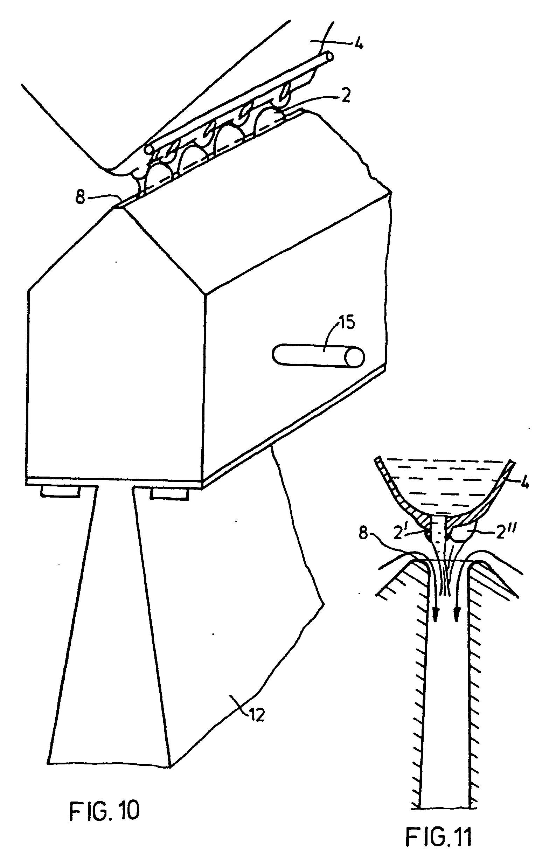

Die erfindungsgemässe Ziehdüse kann im Prinzip rotationssymmetrischen Querschnitt, aufweisen. In diesem Fall ist unter jeder Schmelzeausflussöffnung eine Düse vorzusehen. Nachteilig bei einer Düse mit rotationssymmetrischem Querschnitt sind die relativ geringen Durchsätze von wenigen kg/h je Düse und das Problem, sehr viele Düsen mit grosser Gleichmässigkeit und engen Toleranzen herzustellen sowie das Problem der genauen Positionsierung jeder Düse relativ zur Schmelzeausflussöffnung des Tiegels. Bevorzugt ist daher eine Ziehdüse mit schlitzförmigem Querschnitt, die unterhalb einer Reihe von Schmelzeausflussöffnungen angeordnet ist, wobei eine Vielzahl von Schmelzeströmen in die Düse einfliessen. Zum Beispiel können mehrere hundert Schmelzeausflussöffnungen in relativ geringem Abstand zueinander vorgesehen sein. Der gegenseitige Abstand kann dabei nur wenig mehr als der doppelte Durchmesser einer Schmelzeausflussöffnung betragen (Fig. 10).

Noch höhere Durchsätze der Ziehdüse können erreicht werden, wenn die Schmelzeausflussöffnungen in Doppelreihe angeordnet sind, wobei die beiden Öffnungsreihen «auf Lücke» gegeneinander versetzt sind. Fig. 11 zeigt eine solche Anordnung mit zwei Reihen von Schmelzeaustritts öffnungen 2′ und 2″.

Das Druckgefälle über die Ziehdüse kann durch einen Überdruck in der Umgebung des Tigels erzeugt werden. Zum Beispiel können Tiegelunterseite und Ziehdüseneinlass in einer Druckkammer angeordnet sind, in der ein Druck von overhalb 2 bar, vorzugsweise ca. 3 bar, aufrechterhalten wird.

Als Blasmedium können beliebige Gase, a.B. Heissdampf oder Verbrennungsabgase, eingesetzt werden. Zum Beispiel kann es zum Zerfasern besonders hochschmelzender Mineralfasern zweckmässig sein, den Edelmetalltiegel durch Einsatz eines reduzierenden Blasmediums, z.B. reduziernde Verbrennungsabgase aus einer Verbrennung mit Sauerstoffdefizit, gegen Korrosion zu schützen. Werden Verbrennungsabgase als Blasmedium eingesetzt, kann es zweckmässig sein, diese direkt in der Druckkammer zu erzeugen, die die Tiegelunterseite mit dem Blasdüseneinlauf enthält. Damit die Schmelze bei einer solchen Verfahrensführung aus dem Tiegel austreten kann, müsste ein entsprechender hydrostatischer Druck über dem Schmelzespiegel erzeugt werden.

Anderseits ist auch eine Verfahrensführung möglich, bei der der Diffusoraustritt einem Unterdruckraum von z.B. 0,1 bis 0,3 bar mündet und der Umgebungsdruck des Tiegels der Normaldruck ist. Dann müssen Schleusen vorgesehen sein, durch die die Fasern an die Atmosphäre gefördert werden.

Die notwendigen technischen Mittel für Verfahrensausführungen, bei denen sich die Umgebung des Tiegels und/oder die Faserablage nicht auf atmosphärischem Druck befinden, sind relativ aufwendig.

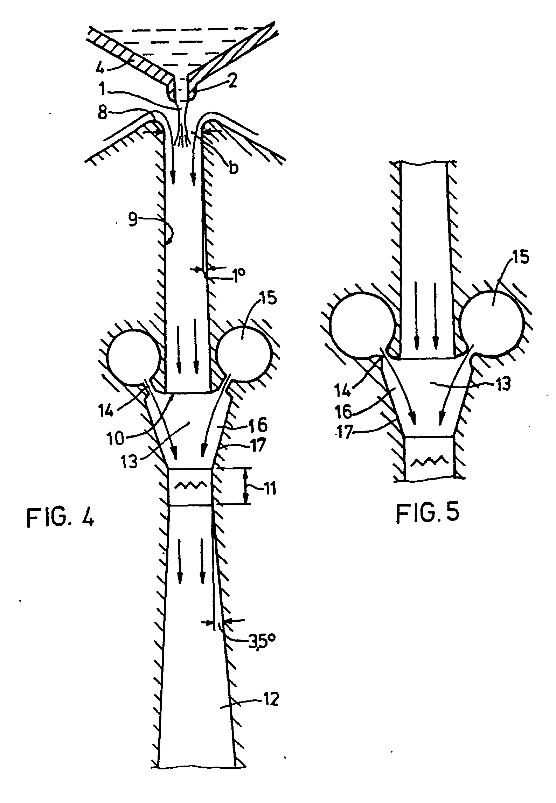

Bevorzugt wird daher die Druckdifferenz zur Erzeugung der Blasmittelströmung durch Treibstrahldüsen erzeugt (Fig. 4).

Hierzu ist zwischen dem Auslassende 10 des divergierenden Teils 9 der Ziehdüse und dem Eintritt in den konstanten Teil 11 der Düse, in dem die Druckumsetzung durch Stoss erfolgt, eine Mischstrecke 13 vorgesehen, in die Treibstrahldüsen 14 einmünden und in der die Vermischung des Treibmittels mit dem Blasmittel erfolgt.

Als Blasmittel dient die Umgebungsluft.

Als Treibmedium wird in diesem Fall zweckmässig ebenfalls Luft eingesetzt. Zum Beispiel kann über die Leitungen 15 Druckluft von 6 bar zugeführt werden, die durch die Treibstrahldüsen 14 entspannt wird und dabei Geschwindigkeiten von oberhalb 400 m/s, bevorzugt zwischen 500 und 600 m/s, erreicht. Erfindungsgemäss erfolgt die Vermischung der Treibstrahlen mit der Übrigen Strömung bei konstantem Druck oder leicht fallendem Druck.

Bevorzugt werden die Treibstrahldüsen 14 als Lavaldüsen ausgeführt (Fig. 5).

Die Führung des Treibstrahls in die Mischstrecke an der Aussenseite der Düse erfolgt derart, dass ein einseitig begrenzter Strömungskanal 16 mit halbseitig konstantem oder leicht konvergierendem Querschnitt durch die Wand 17 erzeugt wird. Der Quirschnittsverlauf über die Länge der Mischstrecke wird zweckmässig empirisch ermittelt.

Am Ende der Mischstrecke 13 herrscht immer noch Überschallgeschwindigkeit.

Die Temperatur des Blasmediums ist für die Abkühlung der Fasern in Anbetracht der Höhe der Temperatur der Mineralschmelze von untergeordneter Bedeutung. Selbst die Temperatur von Verbrennungsgasen von ca. 1000°C wird in der Ziehdüse durch adiabatische Entspannung auf 500 bis 700°C reduziert. Die höhere Viskosität heisser Gase bewirkt eine stärkere Reibung des Blasmediums mit den Schmelzefäden und begünstigt daher das Ausziehen.

Erfindungsgemäss wird jedoch bevorzugt Umgebungsluft bei Raumtemperatur als Blasmedium eingesetzt.

Besonders bevorzugt werden die Schmelzeauslassöffnungen zusätzlich mit Heissgas angeblasen, so dass die Schmeltzeströme mit einem Heissgasfilm hoher Viskosität umgeben werden. Dabei wird der verbesserte Auszieheffekt durch hochviskoses Gas unter energetisch besonders günstigen Bedingungen erhalten, indem nur eine geringe Menge des Blasmediums auf hohe Temperatur geheizt werden muss. Die Heissgasmenge stellt bevorzugt 10 bis 15% der gesamten Menge des Blasmediums.

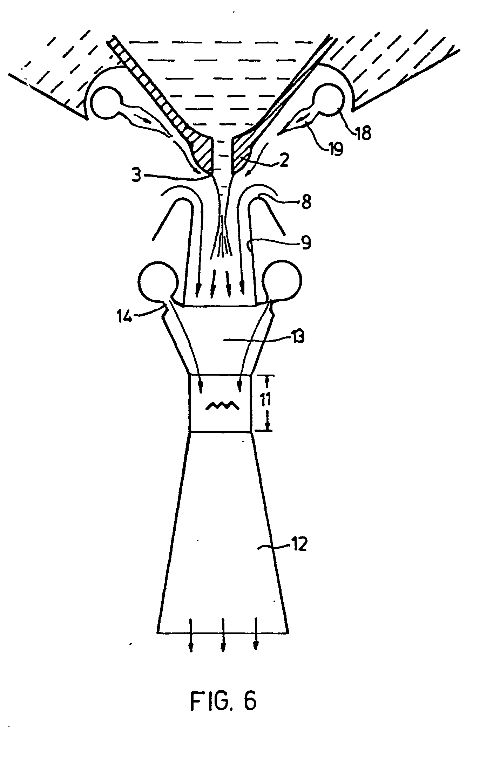

Der die Schmelzeströme umgebende Heissgasfilm kann z.B. dadurch erzeugt werden, das beidseitig der Reihe von Schmelzeausflussöffnungen 3 oberhalb dieser Gaszufuhrröhrchen 18 (Fig. 6) mit in Richtung auf de Schmelzeaustrittsöffnung vorgesehen Bohrungen vorgesehen sind, durch die ein leicht brennbares, gegebenenfalls mit Luft vorgemischtes Gas, z.B. Wasserstoff oder Acetylen, austritt und verbrennt 19. Günstig wirkt sich dabei auch der Schutz der Schmelzeausflussöffnungen durch das Heissgas vor zu starker Abkühlung durch das in die Ziehdüse einströmende Blasmedium aus.

Als Schmelzen können alle zu Fasern ausziehbaren Mineralschmelzen eingesetzt werden. Zum Beispiel können Stein-, Schlacke- und Glasschmelzen zerfasert werden. Optimale Ausziehbedingungen können jeweils durch Regelung des Druckes, mit dei Treibstrahldüsen beaufschlagt werden, eingestellt werden, so dass eine Anpassung an unterschiedliche Temperaturen sowie gegebenenfalls Viskositäten der verschiedenen Mineralschmelzen erfolgen kann.

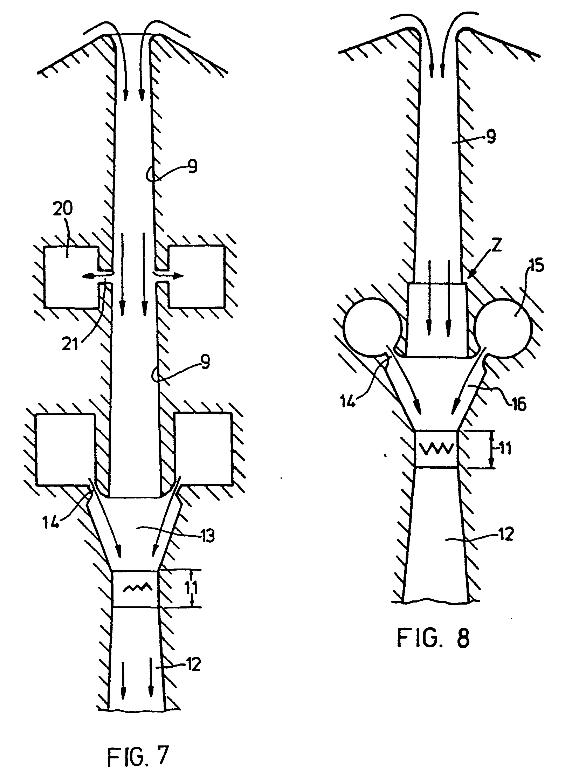

Wird eine besonders dünne Faser, z.B. unterhalb 5 µm, verlangt, ist es auch möglich, den divergierenden Teil 9 der Ziehdüse zu verlängern, indem die laminare Grenzschicht in einer Ebene quer zur Strömungsrichtung abgesaugt wird. Eine solche Ziehdüse ist in Fig. 7 dargestellt. Der divergierende Teil 9 der Ziehdüse weist in einer Ebene quer zur Strömungsrichtung einen in eine Vakuumkammer 20 mündenden Schlitz 2 auf, durch den die laminare Grenzschichtströmung abgesaugt wird. In diesem Falle ist es möglich, den divergierenden Teil der Ziehdüse auf 60 bis 100 mm zu verlängern. Durch mehrfache Grenzschichtabsaugungen können noch längere Düsen mit laminarer Grenzschicht erhalten werden.

Wird nur eine relativ begrenzte Verlängerung des divergierenden Teils der Ziehdüse verlangt, so kann eine Störung der Überschallströmung des Blasmediums durch den Umschlag der laminaren Grenzschicht auch dadurch verhindert werden, dass die Düsenwand an der Stelle, an der der Umschlag erfolgt, zurückgenommen wird und so zusätzlich Raum für eine turbulente Grenzschicht geschafften wird. Dies ist in Fig. 8 dargestellt. Der divergierende Teil 9 der Ziehdüse wird an der Stelle Z, an der der Umschlag erfolgt, plötzlich erweitert. Die Erweiterung soll etwa um 1 bis 1,5 mm auf jeder Seite erfolgen. Auf diese Weise kann der divergierende Teil der Ziehdüse ohne Grenzschichtabsaugung auf 50 bis 65 mm verlängert werden.

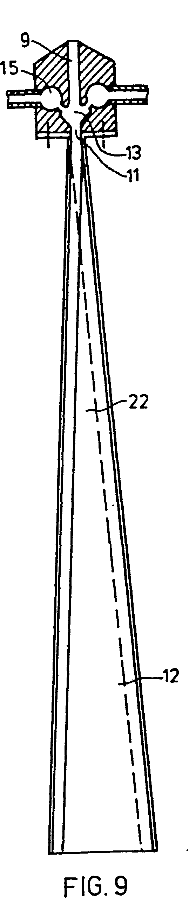

Bei schiltzförmigen Ziehdüsen, in die eine Vielzahl von Schmelzeströmen einfliessen, z.B. mehrere hundert Schmelzeströme, besteht insbesondere im Unterschalldiffusor die Gefahr, dass sich infolge unterschiedlichen Druckanstiegs bei etwas unterschiedlichem Impuls der Strömung in der Tiefe des Schiltzes (senkrecht zur Zeichnungsebene) Querströme und Ablösungen der Strömung ausbilden, die einen gleichmässigen Faseraustritt am Diffusoraustritt verhindern. Bevorzugt werden daher Strömungshindernisse zur Behinderung von Querströmungen im Diffusor vorgesehen. Die Strömungshindernisse können z.B. als sich über zumindest einen Teil des Diffusorquerschnitts erstreckende Trennbleche ausgeführt sein. Bevorzugt erstrecken sich die Trennbleche nur über einen Teil des Querschnitts des Diffusors. Die Oberkante der Trennbleche soll einen Winkel von weniger als 45°, vorzugsweise weniger als 30°, mit der Längsebene der Ziehdüse bilden. Eine bevorzugte Ausführungsform der Trennbleche ist in Fig. 9 dargestellt. Das Trennblech 22 ist einseitig mit einer Hälfte des Diffusors verbunden. Die andere Kante des Trennblechs verläuft etwa parallel zur gegenüberliegenden Seite des Diffusors.

Durch diese Ausbildung der Trennbleche wird eine Ablage von Fasern auf dem Trennblech verhindert. Fasern, die auf das Trennblech auftreffen, gleiten unter Mitnahme durch die Strömung auf der Kante des Trennbleches entlang zum Diffusoraustritt. Der Abstand der einzelnen Trennbleche im Diffusor soll kleiner sein als die Breite des Diffusors am Austritt und grösser als ein Drittel dieser Breite. Mehrere Trennbleche werden jeweils abwechselnd an der einem Seite des Diffusors und an der anderen Seite des Diffusors angebracht. Die Oberkanten der Trennbleche werden besonders bevorzugt masserartig scharfkantig ausgebildet, so das eine möglichst geringe Störung der Strömung des Blasmediums bewirkt wird.

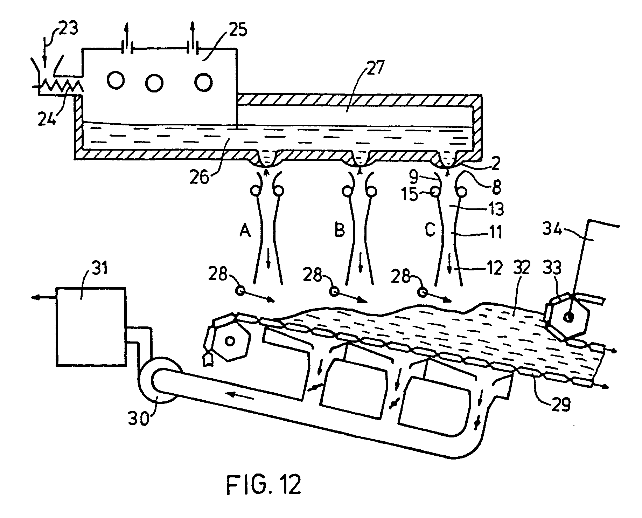

In Fig. 12 ist der industrielle Herstellungsprozess von Mineralwollematten beispielsweise dargestellt. Die mineralischen Rohstoffe werden bei 23 kontinuierlich zugeführt und mittels einer Schnecke 24 in den Ofen 25 gefördert. In der Fig. 12 ist beispielsweise in Wanneofen dargestellt. Insbesondere zum Schmelzen von Gestein ist es auch üblich, Kupolöfen einzusetzen.

Die Schmelze 26 gelangt in einen Vorherd 27 und wird auf mehrere Zerfaserungseinheiten A, B und C verteilt. In der beispielhaften Darstellung befinden sich die Schmelzeausflussöffnungen mit Nippeln 2 im Boden des Vorherdes 27. Es ist auch möglich, unterhalb des Vorherdes von diesem getrennte, die Schmelzeausflussöffnungen 3 enthaltende Tiegel vorzusehen, die aus dem Vorherd gespeist werden.

Die Mineralfasern treten aus dem Unterschalldiffusor 12 der Zerfaserungseinheiten A, B und C getragen von dem Gemisch aus Blasluft und Treibluft mit einer Geschwindigkeit von vorzugsweise unter 20 m/s aus. Unter dem Unterschalldiffusor 12 ist je eine Bindemittelsprüheinrichtung 28 vorgesehen, mittels der das Bindemittel in Form kleiner Tröpfchen auf die Fasern aufgebracht wird.

Durch Absaugen der die Fasern transportierenden Luft unterhalb des perforierten Transportbandes 29 werden die Fasern auf diesem abgelegt. Zur Absaugang ist ein Ventilator 30 vorgesehen. Die Luft wird anschliessend einer Reinigungsstufe 31 zugeführt, in der z.B. suspendierte Bindemitteltröpfchen entfernt werden.

Die auf dem Transportband 29 gebildete Rohmatte 32 wird zwischen dem unterend 29 und einem oberen 33 Transportband auf die Gebrauchsdichte komprimiert und in einen Härtungsofen 34 eingeführt, in dem das Bindemittel ausgehärtet wird.

Beispiel

In ein trichterförmiges Platinschiffchen mit einer Länge von 550 mm, an dessen Unterkante 100 Schmelzausflussöffnungen in Form vorstehender Nippel mit Bohrungen von 2 mm Durchmesser und einem gegenseitigen Abstand von 5 mm vorgesehen sind, fliesst aus einem Schmelzofen eine Schmelze aus Basalt und Kalkstein bei einer Temeratur von 1300°C kontinuierlich ein, so dass eine Füllhöhe von 80 mm im Schiffchen aufrechterhalten wird. Unterhalb des Schiffchens ist eine erfindungsgemässe schliltzförmige Ziehdüse wie in Fig. 4 angeordnet, die einen engsten Querschnitt von 5 mm aufweist und deren Einlaufteil eine Krümmung mit Radius 1,5 mm aufweist. Der divergierende Teil der Düse hat eine Länge von 35 mm und einen Erweiterungswinkel von 2°. In die Treibgaszuführungen wird Pressluft von 6 bar eingelassen und durch Lavaldüsen mit einer Geschwindigkeit von 550 m/s in die Mischstrecke eingeblasen. Die Menge des Treibmediums beträgt 1500 kg Luft/h, so dass am Austritt des divergierenden Teils ein Druck von ca. 0,25 bar gehalten wird. Die Schmelzeaustrittsöffnungen werden beidseitig durch kleine Wasserstoff-Flammen angeströmmt, so dass das erzeugte, die Schmelzeströme umgebende Heissgas ca. 7 Vol.-% des Durchsatzes an Blasmedium von ebenfalls ca. 1500 kg/h ausmacht. Die Mischstrecke hat eine Länge von 20 mm. Der Bereich mit konstantem Querschnitt hat eine Länge von 4 mm und eine Breite von 5,5 mm. Der daran anschliessende Unterschalldiffusor hat einen Erweiterungswinkel von 7° und eine Länge von 500 mm. Ferner sind Trennbleche alternierend im Abstand von je 100 mm angeordnet. Der Schmelzedurchsatz der Düse beträgt 350 kg/h. Am Diffusoraustritt treten Glasfasern von ca. 5 µm Dicke und eine mittleren Länge von 50 mm aus. Der Perlengehalt liegt unter 3%.

Eine aus der Wolle gebildete Matte hat eine Raumdichte von 15 km/cm³. Die Wärmeleitzahl der 5 cm dicken Matte beträgt 0,036 W/mK.

**Patentansprüche**

1. Ziehdüse zur Durchführung eines Verfahrens zur Herstellung von Mineralwollefasern, vorzugsweise Steinwollefasern, nach dem Düsenblasverfahren, bei dem aus mindestens einer Öffnung im Boden eines Schmelzetiegels (4) mindestens ein Schmelzestrom (1), austritt, der in einer konvergierend-divergierenden Ziehdüse durch ein im wesentlichen parallel zu dem Schmelzestrom strömendes Blasmedium zerfasert wird, wobei das Blasmedium durch ein zwischen Düseneinlass (8) und -auslass erzeugtes Druckgefülle in die Düse eingesaugt wird und die Strömungsgeschwindigkeit in einem nachgeschalteten Diffusor (12) reduziert wird, dadurch gekennzeichnet, daß

a) die Kontur der Düse im konvergierenden Teil innerhalb zweier konzentrischer Radien von r1 = 28% und r2 = 50%, vorzugsweise r2 = 32%, des engsten Durchmessers der Düse verläuft (Fig. 2),

b) der divergierende Teil (9) der Düse einen Erweiterungswinkel (α) von 1,8 bis 2,2° aufweist und

c) unterhalb des divergierenden Teils ein Bereich (11) mit konstantem Querschnitt vorgesehen ist, an den sich ein Unterschalldiffusor (12) anschliesst,

d) der divergierende Teil (9) eine Länge von 35 bis 40 mm hat, so daß

im Einlaß (8) der Ziehdüse ein solches Druckgefälle erzeugt wird, daß der Schmelzestrom in mindestens 30 Einzelfäden aufgespalten wird,

im divergierenden Teil (9) der Ziehdüse ein minimales, die Auslösung von Druckstössen verhinderndes Druckgefälle über eine ohne Ablösung der laminaren Grenzschicht zur Erstarrung der Fasern ausreichenden Länge besteht, und

die danach folgende Druckumsetzung zuerst mit Stoß bei konstätem Querschnitt der Ziehdüse und danach in an sich bekannter Weise im Unterschalldiffusor (12) bewirkt wird.

2. Ziehdüse nach Anspruch 1, gekennzeichnet durch eine zwischen dem divergierenden Teil (9) und dem Teil (11) mit konstantem Querschnitt vorgesehen Mischstrecke (13), in die Treibstrahldüsen (14) einmünden.

3. Ziehdüse nach Anspruch 1 oder 2, dadurch gekennzeichnet, daß im divergierenden Teil (9) in mindestens einer Ebene quer zur Strömungsrichtung des Blasmediums Mittel (20, 21) zur Absaugung der laminaren Grenzschicht vorgesehen sind.

4. Ziehdüse nach Anspruch 1 bis 3, dadurch gekennzeichnet, daß sich die Schmelzeausflußöffnungen (3) in einem solchen Abstand von der Ziehdüse befinden, bei dem ein Druck von 0,92 bis 0,98 des Umgebungsdrucks des Tiegels (4) herrscht.

5. Ziehdüse nach Anspruch 1 bis 4, dadurch gekennzeichnet, daß das Blasmedium Luft ist, die sich auf Umgebungstemperatur befindet und daß am Austritt des Tiegels (4) Mittel (18, 19) zur Anströmung des Schmelzestromes (1) mit Heißgas vorgesehen sind.

**Revendications**

1. Filière pour la mise à exécution d'un procédé de fabrication de fibres de laine minérale, de préférence, de fibres de laine de roche, suivant le procédé de soufflage par tuyères, procédé dans lequel d'au moins une ouverture pratiquée dans le fond d'un creuset de fusion (4), sort au moins un courant de masse fondue (1) qui est défibré dans un filière convergente-divergente par un milieu de soufflage s'écoulant essentiellement parallèlement au courant de la masse fondue, le milieu de soufflage étant aspiré dans la filière par suite d'une chute de pression produite entre l'entrée (8) et la sortie de la filière, tandis que la vitesse d'écoulement est réduite dans un diffuseur (12) monté en aval, caractérisée en ce que:

1) le contour de la filière dans la partie convergente s'étend à l'intérieur de deux rayons concentriques de r1 = 28% et r2 = 50%, de préférence, r2 = 32% du diamètre le plus étroit de la filière (figure 2),

b) la partie divergente (9) de la filière a un angle d'élargissement (α) de 1,8 à 2,2°, et

c) en dessous de la partie divergente, est prévue une zone (11) à section transversale constante à la suite de laquelle vient un diffuseur subsonique (12),

d) la partie divergente (9) a une longueur de 35 à 40 mm en sorte que:

dans l'entrée (8) de la filière, est produite une chute de pression telle que le courant de masse fondue se scinde en au moins 30 fils individuels;

dans la partie divergente (9) de la filière, une chute de pression minimale empêchant le déclenchement de coups de bélier règne sur une longueur suffisante pour solidifier les fibres sans décoller la couche limite laminaire; et

la conversion de pression qui a ensuite lieu, est produite tout d'abord avec un choc dans la section transversale constane de la filière puis, de façon connue en soi, dans le diffuseur subsonique (12).

2. Filière suivant la revendication 1, caractérisée en ce qu'elle comporte une zone de mélange (13) prévue entre la partie divergente (9) et la partie (11) à section transversale constante, zone de mélange dans laquelle débouchent des tuyères à jets de propulsion (14).

3. Filière suivant les revendications 1 ou 2, caractérisée en ce que, dans la partie divergente (9) et dans au moins un plant s'étendant transversalement au sens d'écoulement du milieu de soufflage, sont prévus des moyens (20, 21) en vue d'aspirer la couche limite laminaire.

4. Filière suivant les revendications 1 à 3, caractérisée en ce que les ouvertures de sortie (3) de la masse fondue sont écartées de la filière d'une distance à laquelle règne une pression de 0,92 à 0,98 de la pression ambiante de creuset (4).

5. Filière suivant les revendications 1 à 4, caractérisée en ce que le milieu de soufflage est l'air qui se trouve à la température ambiante et en ce que des moyens (18, 19) sont prévus à la sortie du creuset (4) pour faire passer un courant de gaz chaud sur le courant de masse fondue (1).

**Claims**

1. Drawing nozzle for carrying out a process for the production of mineral wool fibres, preferably rock wool fibres, according to the jet blast process, in which at least one melt stream (1) issues from at least one opening in the base of a melting crucible (4) which melt stream is separated into fibres in a converging-diverging drawing nozzle by a blast medium flowing substantially parallel to the melt stream, the blasting medium being drawn into the nozzle by suction due to a drop in pressure produced between the nozzle inlet (8) and the nozzle outlet and the rate of flow being reduced in a diffuser (12) connected downstream, characterised in that

a) the contour of the nozzle in the converging portion extends within two concentric radii of r1 = 28% and r2 = 50%, preferably r2 = 32%, of the narrowest diameter of the nozzle (Fig. 2),

b) the diverging portion (9) of the nozzle has an expansion angle (α) of 1.8 to 2.2° and

c) below the diverging portion a region (11) with a constant cross-section is provided to which a subsonic diffuser is connected (12), and

d) the diverging portion (9) has a length of 35 to 40 mm, so that

in the inlet (8) of the drawing nozzle such a pressure drop is produced that the melt stream is split into at least 30 individual fibres,

in the diverging portion (9) of the drawing nozzle a minimum drop in pressure, which prevents the initiation of pressure shocks, exists over a length which is sufficient for the solidification of the fibres without separation of the laminar boundary layer, and

the subsequent pressure conversion is initially effected with a shock at a constant cross-section of the drawing nozzle and thereafter in known manner in the subsonic diffuser (12).

2. Drawing nozzle according to Claim 1, characterised by a mixing zone (13) provided between the diverging portion (9) and the portion (11) with a constant cross-section, into which zone the propulsion jet nozzles (14) open.

3. Drawing nozzle according to Claim 1 or Claim 2, characterised in that means (20, 21) for removing the laminar boundary layer by suction are provided in the diverging portion (9) in at least one plane transverse to the direction of flow of the blasting medium.

4. Drawing nozzle according to Claims 1 to 3, characterised in that the melt outlet openings (3) are at a distance from the drawing nozzle at which there is a pressure of 0.92 to 0.98 of the ambient pressure of the crucible (4).

5. Drawing nozzle according to Claims 1 to 4, characterised in that the blast medium is air which is at the ambient temperature and that means (18, 19) are provided at the outlet of the crucible (4).

EP 0 038 989 B2

FIG. 1

FIG. 2

FIG. 3

FIG. 4

FIG. 5

FIG. 6

5

FIG. 7

FIG. 8

FIG. 9

FIG. 10

FIG.11

FIG. 12